# EUROPEAN PATENT SPECIFICATION

(11) **EP 2 326 597 B1**
(45) Date of publication and mention of the grant of the patent: **19.11.2014**
(21) Application number: 09808445.2
(22) Date of filing: 18.08.2009
(51) Int. Cl.: C02F 1/72, B01J 21/06, B01J 35/06, C02F 1/32, C02F 1/44, C02F 1/74, C02F 1/76, C02F 1/78, C02F 1/48, C02F 101/30, C02F 1/00, B01J 37/02, B01D 69/14, B01J 35/00, B01J 35/08

(54) **PROCESS AND SYSTEM FOR REMOVAL OF ORGANICS IN LIQUIDS**
VERFAHREN UND SYSTEM ZUR ENTFERNUNG ORGANISCHER STOFFE AUS FLÜSSIGKEITEN
PROCÉDÉ ET SYSTÈME POUR ÉLIMINER DES MATIÈRES ORGANIQUES PRÉSENTES DANS DES LIQUIDES

(30) Priority: 18.08.2008 NO 20083578
(43) Date of publication of application: 01.06.2011
(73) Proprietor: Sinvent AS, 7465 Trondheim (NO)
(72) Inventor: KUMAKIRI, Izumi, N-0176 Oslo (NO); BREDESEN, Rune, N-1087 Oslo (NO); WARSZYNSKI, Piotr, PL-30-218 Krakow (PL); NOWAK, Pawel, PL-30239 Krakow (PL); JUAN, Yang, N-0753 Oslo (NO); SIMON, Christian, N-0873 Oslo (NO)
(74) Representative: Hermansen, Cécile Irene
(86) International application number: PCT/NO2009/000291
(87) International publication number: WO 2010/021552

(56) References cited:
- EP-A1- 0 819 649
- EP-A1- 1 555 064
- WO-A1-2007/134304
- WO-A1-2008/076082
- JP-A- H09 192 659
- JP-A- 2003 334 454
- US-A- 6 117 337
- US-A1- 2005 035 066
- DATABASE WPI Week 200726, Derwent Publications Ltd., London, GB; AN 2007-262036, XP003026085 & JP 2007 039268 A (CASIO COMPUTER CO LTD) 15 February 2007
- THIES, CURT ET AL.: 'Encyclopedia of Chemical Technology', vol. 16, 14 October 2005 pages 438 - 463, XP003026086
- DATABASE WPI Week 199745, Derwent Publications Ltd., London, GB; AN 1997-484626, XP003026087 & JP 9 225 321 A (SEKISUI CHEM IND CO LTD) 02 September 1997
- ZHENGPING, L. ET AL: 'Preparation of Well-shaped Microcapsule Immobilizing Inorganic Nanoparticles' CHINESE JOURNAL OF CHEMICAL ENGINEERING vol. 16, no. 3, June 2008, pages 384 - 388, XP022856531
- WANG, HUI-LONG ET AL: 'Preparation and application of sustained release microcapsules of potassium ferrate(VI) for dinitro butyl phenol (DNBP) wastewater treatment' JOURNAL OF HAZARDOUS MATERIALS vol. 169, 2009, pages 448 - 453, XP026282688

## Description

The invention relates to an effective water treatment process for removal of organics in liquid, especially potable water. The process combines ceramic porous membranes having photo-catalytic properties to oxidise the organic matter with micro- and nanocapsules that will deliver strong oxidising agents at the membrane surface.

Chlorine is widely used in the treatment of potable water today. According to toxicological studies and reports, some disinfection by-products (e.g. trihalomethane (THM), haloacetic acid (HAA), chlorite, chlorate, bromate) are possible human carcinogens. Most of the chlorine demand in unpolluted drinking waters is exerted by natural organic matter (NOM).
The optimum selection of treatment processes to remove organics depends on the character of the organics present and on the required final quality of the treated water. Generally alum is the best performing inorganic coagulant for NOM, colour and turbidity removal under conventional pH conditions (6-7). However, there is a portion of the organic matter that cannot be removed by coagulation processes and will require additional treatment. The residual NOM after treatment affects the disinfectant demand, the formation of disinfection by-products and biofilm formation in the distribution system. Removal of biodegradable organics will reduce disinfectant decay and biofilm growth in distribution systems.

The selection of a treatment process to remove organics will be dependant on the character of the organics and the extent of removal required. The need to remove NOM for improving water quality beyond what is achievable by coagulation alone will require additional treatment. For the treatment of water for potable use a number of advanced treatment techniques have been developed worldwide. These generally fall into three categories: oxidative processes, adsorbents and membrane filtration.

### Oxidative process:

UV-treatment of NOM leads to progressive reduction in its molecular weight, the demand of organic carbon and eventual mineralization. The product water from the VUV/BAC process presents low potential health risks in terms of THM, HAA, nitrite, hydrogen peroxide, bromate, cytotoxicity and mutagenicity.

A process involving a polymer adsorption resin incorporating iron was specifically designed for the removal of DOC from drinking water (Morran et al, 1996). This process combined with powdered activated carbon (PAC) and coagulant treatment was found to improve the amount of DOC removed by between 82-96%, to decrease chlorine demand, and to significantly decrease THM. Bacterial regrowth was however increased, highlighting the critical difference between using a treatment to reduce NOM concentration and changing NOM character.

### Adsorbents:

When activated carbon is applied for the removal of problem microcontaminants, such as taste and odour compounds, algal toxins or pesticides, NOM affects significantly its effectiveness. Strong competition for adsorption sites results in higher dose requirements for powdered activated carbon (PAC) and shorter lifetimes for granular activated carbon (GAC) filters. NOM character also plays a role in the competitive effect, with the NOM in the molecular weight range similar to the target compound causing the greatest competition, and therefore the greatest effect on adsorption.

### Membrane filtration:

Microfiltration/Ultrafiltration membranes remove little NOM as the size of the molecules is usually smaller than the pore size of the membranes (see Table 1). However, NOM fouls low pressure membranes and chemical cleaning is required to restore the flux. Composition of NOM has a strong impact on the rate of fouling: hydrophilic neutral compounds with high molecular weight appear to have a large influence on the fouling rate.

**Table 1. Membrane filtration processes applied to NOM removal**

| Membrane System | Trans Membrane Pressure (kPa) | Turbidity Removal (%) | NOM Removal (%) | Water Loss (%) |
|---|---|---|---|---|
| Microfiltration | <100 | >97 | <2 | 5-10 |
| Ultrafiltration | <100 | >99 | <10 | 10-15 |
| Nanofiltration | <500 | >99 | >90 | 15-30 |

Coagulants almost always lower the rate of membrane fouling. Addition of particles, such as magnetite, with a coagulant may improve membrane performance by increasing the porosity of the filter cake. UV-degradation of NOM prior to membranes lowers the fouling rate of membranes.

Application of photo-catalysis to liquid treatment has been limited due to the difficulties in having efficient contact between photo-catalysts and reactants in liquid and in supplying sufficient light to the photo-catalysts. Dispersing photo-catalysts having fine powder form in liquid increases the contact between photo-catalysts and reactants in liquid. However, separating the fine photo-catalysts that can have size from a few nanometres to sub-micrometers from the liquid is difficult. In addition, the powder in liquid reduces the light strength in the depth direction quickly. Accordingly, large part of the photo-catalysts can be in short of light supply. As photo-catalytic activity depends on the light power, the configuration of dispersing photo-catalysts may not give the optimum oxidation performance of the photo-catalytic material. Photo-catalytic microspheres of size about 10µm to about 200 µm improve not only the recycle of the microspheres by membrane filtration but also could improve the photo-catalytic ability than photo-catalyst in powder form (WO 2008/076082).

Immobilised catalyst is preferred in the sense that the process does not require extra facility to separate out the catalyst. In addition, catalyst loss during the treatment can be negligible which is important when expensive catalysts are employed in the system. Furthermore, light will be supplied evenly to the photo-catalyst independently on the photo-catalyst position in the liquid. In such immobilised catalyst system, liquid can flow over the catalyst (cf. US 5 779,912) and through the catalyst layer ("Photo-catalytic membrane reactor using porous titanium oxide membranes ,Tsuru, T; Toyosada, T; Yoshioka, T, et al., J. Chem Eng. Japan, Vol. 36 (9), p. 1063-1069 (2003)). Extra gas can be added to the reaction field by using membrane (photo-WaterCatox, WO 02/074701.)

When liquid is supplied over the catalyst with parallel flow to the catalytic layer, turbulent flow and narrow liquid layer thickness over the catalytic layer are preferred to facilitate the contact between reactants in the liquid and photo-catalyst, and to maintain the light power as strong as possible and to increase the catalyst/reactant ratio. On the contrary, if the liquid goes through the catalytic layer, reactants will be transported to the catalyst by diffusion and also by the flow. This configuration is beneficial for the transport. However, it also can cause problems: the permeation pathways have nano-meter order size in the catalytic layer and the pathways can be plugged after certain time of operation with particles or molecules in the liquid. Plugging causes pressure increase at the liquid side and reduction of flux going through the layer. In addition, higher pressure, such as 5 - 100 bars, is required to obtain sufficient flux going through the catalytic layer as the permeation is reduced both by the resistances of catalyst layer and porous supporting layer.

The encapsulation of the photo-catalyst (for example, TiO₂) could in many cases enhance the optical/photo-catalytic properties. Photo-catalyst can also be coated by e.g. porous silica layers to prevent deterioration of a base material that has a close contact with photo-catalyst (JP 09225321 A1).

JP 2003096399 describes use of a photo-catalytic microcapsule of TiO₂. A photo-catalyst support for use in water treatment based on photo-catalyst coated particles having core-shell structure is reported in JP 2006247621.

The inventors of present invention have now found that the encapsulation of oxidizing agents such as H₂O₂ in microcapsules such as TiO₂ capsules immobilized on a membrane having photocatalytic properties could further enhance the photo-catalytic properties. The controlled release of the oxidizing agents could significantly improve the efficiency of the photo-catalysts. The advantages of encapsulation of oxidizing agents can be listed as follows:
1) Provide a barrier layer around oxidizing agents, and thus, improve the lifetime of the oxidizing agent by releasing it in a controlled way.
2) Improve the efficiency and durability of the membrane having photo-catalytic properties by releasing the oxidizing agents from the microcapsules in a controlled way.
3) Reduce plugging by immobilizing the reduced species (if any) to the membrane having photocatalytic properties.

Exemplary relevant prior art directed to photocatalytic water treatment in the presence of oxidizing agent includes JP2003334454, WO2007/134304, JPH09192659, EP1555064, US6117337, EP0819649 and US2005/035066.

The present invention provides a process for removal of organics in liquids, especially dilute, toxic organics in water, by contacting the liquid with a system comprising microcapsules containing oxidizing agents, a membrane having photo-catalytic properties and a light source, and wherein said microcapsules release said oxidizing agents in a controlled manner, and said microcapsules are immobilized on the membrane.

The present invention further provides a system for removal of organics in liquids, especially dilute, toxic organics in water, comprising microcapsules containing oxidizing agents, a membrane having photo-catalytic properties and a light source, and wherein said microcapsules release said oxidizing agents in a controlled manner, and said microcapsules are immobilized on the membrane.

The microcapsules can be made of porous materials, e.g. mesoporous or microporous materials or can be made of dense materials. Further, the microcapsules can be made of photo-catalytic material, e.g. TiO₂. The microcapsules can also be made of inorganic materials like metal oxides or organic and inorganic hybrid composite materials or organic materials.

The microcapsules are immobilized on a membrane having photocatalytic properties.

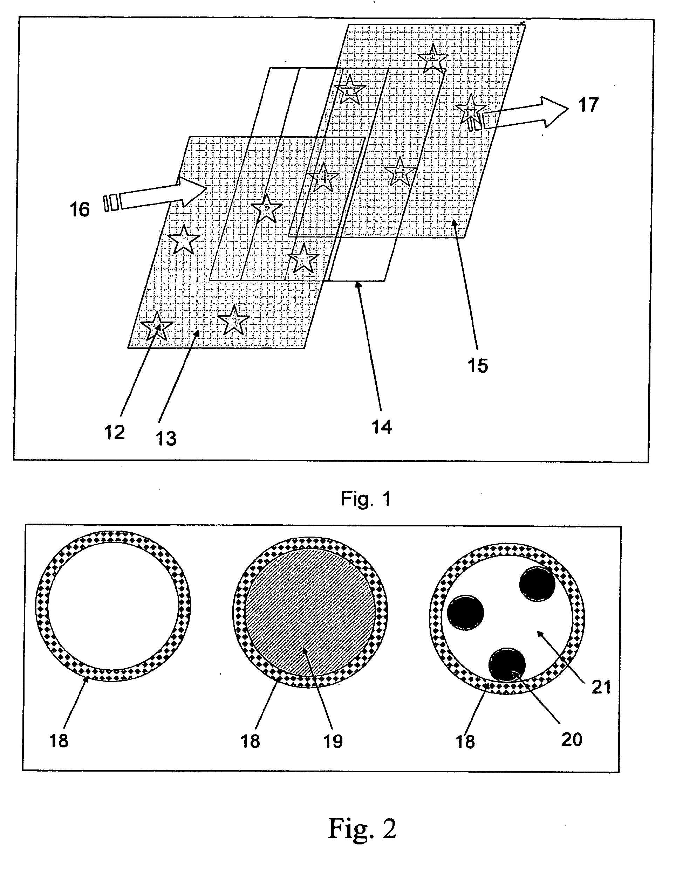

Figure 1 illustrates a system (not in accordance with the invention), wherein photo-catalysts 12 are immobilised/fixed on a mesh/filter 13, having pore size in the range of 1 µm to 1 cm and thickness in a range a few µm to 1 cm. Light may be introduced with help of fibre, bulb or other method 14. Several photo-catalytic meshs/filters 13, 15 and light sources 14 can be combined as shown in the illustration in Fig. 1. In this configuration, the liquid is introduced from one side 16, goes through the combined structure and comes out from the unit 17.
The advantages of this configuration are: less transport resistance, better mass transport of reactant(s) to the catalytic surface, fixed catalyst, short distance from the light source to the catalyst, supply of the oxidising agent from the capsules.

Figure 2 shows three typical structures of photo-catalytic micro- or nanocapsules. Left structure: hollow photo-catalytic capsule. The particle consists of a photo-catalytic layer (shell) 18, which can be dense or porous. This capsule is hollow.
Middle: The core 19 of the capsule with shell 18 is filled with liquid, solid or gas that has oxidising property by itself or generating oxidants by photo-catalysis. Such capsules may be used in the present invention Right: The central void 21 of the capsule has two or multi mixture of gas, liquid and/or solid 20.

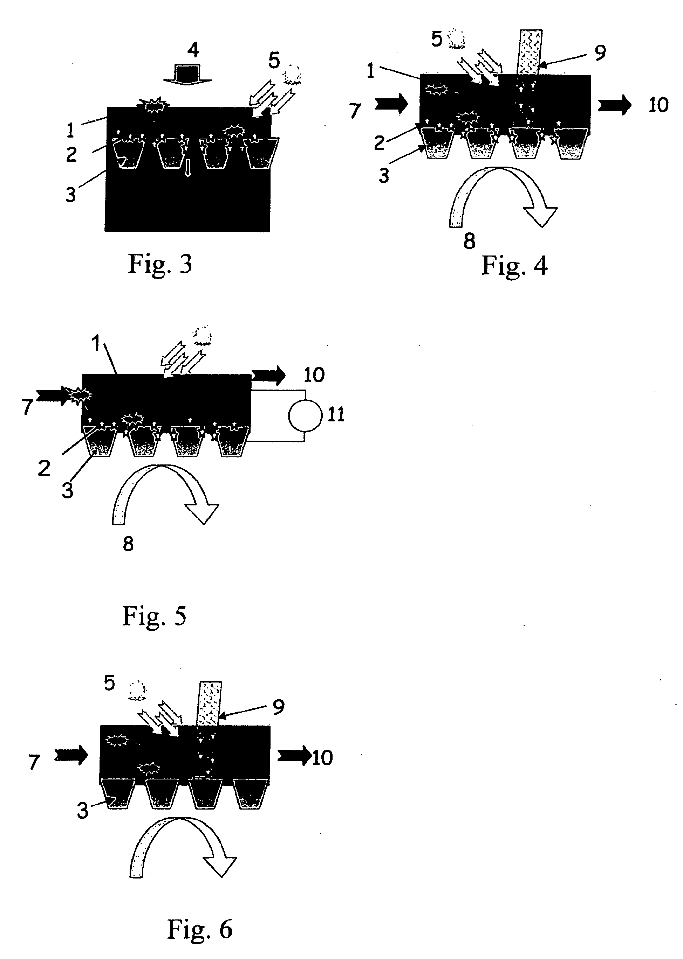

Figure 3 illustrates a system, where catalytic capsules 2 are immobilized on a porous membrane 3, the membrane 3 having thus photocatalytic properties. The porous membrane can be made by oxides such as alumina, titania, silica, by metal, such as stainless steel, by adsorbents such as carbon, clay or by other materials. Pore size can be for example from 1 nm to 100 µm. Liquid containing molecules 1 to be treated is fed from one side of the membrane 3. The feed liquid line 4 has some overpressure versus the permeate line 6. Reaction occurs on the catalytic capsules 2 immobilized on the membrane 3. Light 5 is applied. The porous membrane 3 having photocatalytic properties acts not only as a support of the capsules 2 but also as a sieve: larger molecules will not go through the membrane.

Figure 4 illustrates another embodiment of the invention. Catalytic capsules 2 are immobilized on a porous membrane 3, the membrane 3 having thus photocatalytic properties and in addition on a mesh filter 9. Mesh filter has a large pore size, such as 10 - 10000 µm, to reduce the resistance of the water permeation. Liquid containing molecules 1 to be treated, is supplied on one side of the membrane 7, and flows over the membrane and goes out from the membrane unit 10. Reaction occurs on or close to the capsules 2 immobilized on the membrane 3 and/or filter 9. Light 5 is applied. Gas 8, such as oxygen, ozone, air, enriched air, hydrogen, methane, chorine or liquid, such as hydrogen peroxide, can be supplied from the other side of the membrane 3. This additional gas or liquid enhances the oxidation reaction.

Figure 5 illustrates another embodiment of the invention. Catalytic capsules 2 are immobilized on a porous membrane 3, the membrane 3 having consequently photocatalytic properties. Mesh filter as described in Figure 4 can be applied in addition. Liquid containing molecules 1 to be treated, is supplied on one side 7 of the membrane, flows over the membrane and goes out from the membrane unit 10. Electrical field 11 is applied to increase the diffusion of molecule 1 to the porous membrane surface 3 and to the mesh filter as described in figure 4 where the capsules are immobilized. The membrane needs to have electrical conductivity and can be made by metals or coated by metal. Reaction occurs on or close to the capsules 2 immobilized on the membrane 3 and/or filter 9. Light 5 is applied. Gas, such as oxygen, ozone, air, enriched air, hydrogen, methane, chorine or liquid, such as hydrogen peroxide, can be supplied from the other side 8 of the membrane 3. This additional gas or liquid enhances the reaction by, for example reinforcing the oxidation, hydrogenation or other reactions.

Figure 6 shows a system not in accordance with the present invention with mesh filter 9 containing capsules in combination with a normal membrane, without photo-catalytic properties. Liquid containing organics is supplied from 7 and flows through the mesh filter, and out from 10, organics are oxidized by the photo-catalysts on the mesh 9. Reaction occurs with light 5. The bottom "normal membrane" 3 can be porous or dense. In case of a porous membrane, additional oxidant(s) can be added through the normal membrane as described in other parts.

### EXAMPLES

The following examples 1-4 describe preparation of capsules containing oxidizing agents to be used in the present invention.

### Example 1)

### Encapsulation of KMnO₄ oxidant in paraffin wax:

Potassium Permanganate KMnO₄ (Carus Chemical Company) and paraffin wax were used as oxidant and capsule material, respectively. The powder of the oxidant was portion by portion added to the melted wax with continuous stirring and heating to form homogeneous mixture containing 45% of oxidant. After stirring the mixture for some time, the molten wax with dispersed oxidant was added drop-wise slowly to water. The molten wax solidified immediately when the droplet of wax got in contact with water.

Formed capsules were weighed and poured to predetermined volume of water.

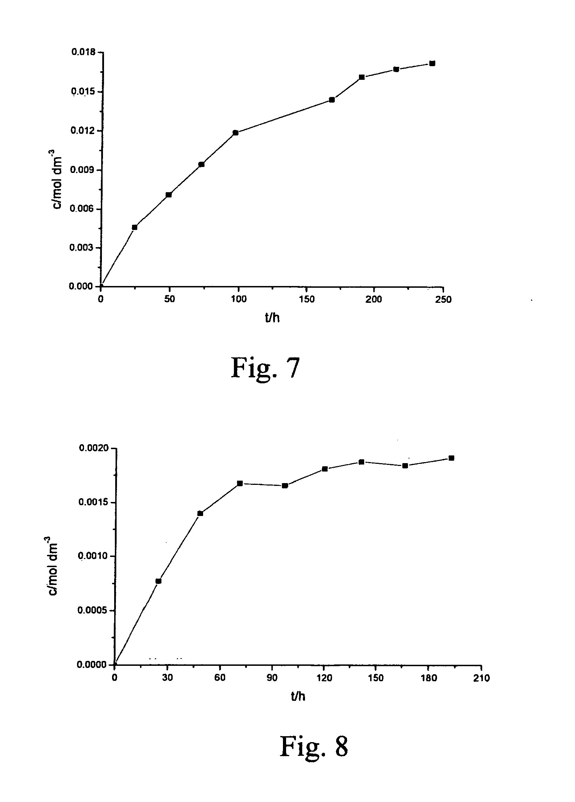

Figure 7 shows one example of the KMnO₄ release from the formed capsules. Suspension of 0.17 g of capsules dispersed in 0.2 l water was stirred with the mechanical stirrer and the concentration of KMnO₄ was measured with predetermined intervals of time.

KMnO₄ has a solubility of 6.4 g/100ml water at room temperature. Accordingly, if KMnO₄ was dispersed as powder, it will dissolve immediately. On the contrary, the concentration of KMnO₄ increased slowly but continuously with time when capsules were added. The results clearly show that the encapsulation can control the dissolution of KMnO₄.

### Example 2)

### Encapsulation of Na₂S₂O₈ in paraffin wax:

Sodium Persulfate Na₂S₂O₈ (Sigma-Aldrich) and paraffin wax were used as oxidant and capsule material, respectively. The powder of the oxidant was portion by portion added to the melted wax with continuous stirring and heating to form homogeneous mixture containing 37% of oxidant. After stirring the mixture for some time, the molten wax with dispersed oxidant was added drop-wise slowly to water. The molten wax solidified immediately when the droplet of wax got in contact with water.

Figure 8 shows one example of the Na₂S₂O₈ release from the formed capsules. Suspension of 0.13 g of capsules dispersed in 0.1 l water was stirred with the mechanical stirrer and the concentration of Na₂S₂O₈ was measured with predetermined intervals of time.

Na₂S₂O₈ has a solubility of 55.6 g/100ml water at room temperature. Accordingly, if Na₂S₂O₈ was dispersed as powder, it will dissolve immediately. On the contrary, the concentration of Na₂S₂O₈ increased slowly but continuously with time when capsules were added. The results clearly show that the encapsulation can control the dissolution of Na₂S₂O₈.

### Example 3)

### Encapsulation of oxidants in organic resin

Potassium Permanganate KMnO₄ (Carus Chemical Company) or Sodium Persulfate Na₂S₂O₈ (Sigma-Aldrich) were used as oxidants. Sylgard resin (Aldrich) was used as capsule material, respectively. Sylgard resin was mixed with the Sylgard curing agent and powdered oxidant then vigorously mixed to obtain uniform mixture. Obtained mixture of the resin with oxidant was poured on the special matrix. The matrix was made from a stainless steel foil. In the flat foil many indentations (few millimeters in diameter) of the semispherical form were made. After pouring the mixture of the resin with the oxidant on the matrix the excess mixture was wiped out, only the mixture contained in the indentations was left. The matrix was left at the room temperature for 24 hours. The capsules were withdrawn and used. In the case of both oxidants the concentration of the oxidant in the mixture was 45%.

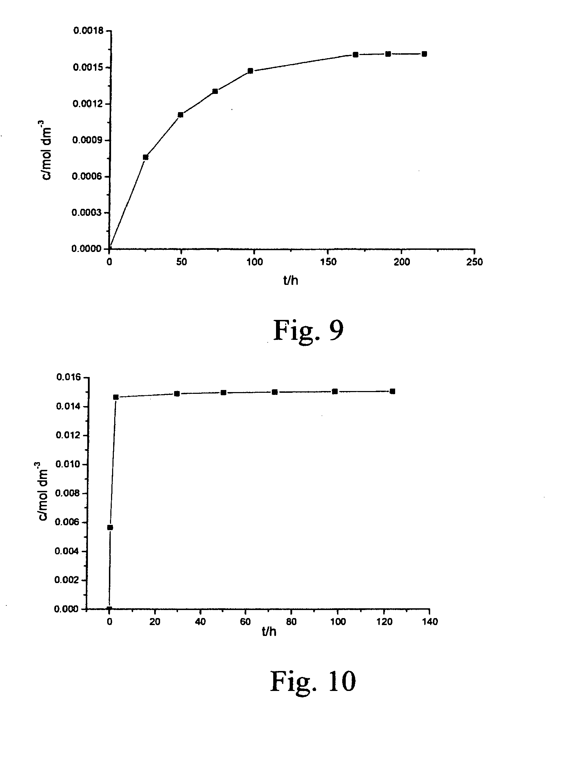

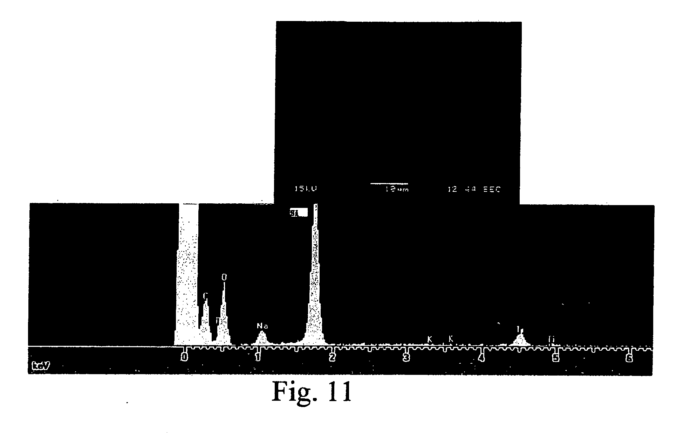

Figure 9 shows one example of the KMnO₄ release from the formed capsules. Suspension of 0.15 g of capsules dispersed in 3 l water was stirred with the mechanical stirrer and the concentration of KMnO₄ was measured with predetermined intervals of time.

Similar to examples 2 and 3, the concentration of KMnO₄ increased slowly but continuously with time when capsules were added. The results clearly show that the encapsulation can control the dissolution of KMnO₄.

### Example 4)

### Encapsulation of oxidants in inorganic shell:

Potassium Permanganate KMnO₄ (Carus Chemical Company) or Sodium Persulfate Na₂S₂O₈ (Sigma-Aldrich) were used as oxidants. The inner void of hollow particles consists of porous silica shell and having size of 2-5µm (Washin Chemical, Japan) was filled with oxidant as follows.

Persulfate and permanganate anions are negative, so to facilitate adsorption of oxidant in silica capsules silica powder was first treated in aqueous solution of PEI (Polyetylene imine, m.w. 70000, Polyscience) of the concentration 2000 ppm for 1 hour with continuous stirring. The capsules were separated by centrifugation, washed with water and dried at the room temperature. Dried silica was poured to the saturated solution of sodium oxidant for 24 hours. Finally the silica powder with oxidant was washed and dried.

Figure 10 shows one example of the KMnO₄ release from the formed capsules. Suspension of 0.5 g of capsules dispersed in 0.08 I water was stirred with the mechanical stirrer and the concentration of KMnO₄ was measured with predetermined intervals of time.

The dissolution of KMnO₄ is faster than in the examples 1 to 3. This is because the shell of the capsule is porous in this case, while the shell in examples 1 to 3 was dense. The dissolution of KMnO₄ was limited, showing the possibility to control the release by the pore structure of the shell material.

The comparison of the results of examples 1 to 4 also show that changing type of capsule material and amount of oxidant in capsule one can control effectively the rate of oxidant release.

### Example 5)

### Combination of oxidants and photo-catalyst:

This example illustrates the effect of mixing oxidants with photo-catalysts.
Humic acid sodium salt (HANa) was dissolved in water with the concentration of 50mg/l. The oxidant and the photo-catalyst were mixed with the HANa solution and the mixture solution was exposed to either visible light (VIS) or UV light for one hour. Na₂S₂O₈ was used as oxidant and TiO₂ (Degussa, P25) was used as photo-catalyst. Halogen lamp and Xenon lamp were used as VIS and UV sources, respectively. The concentration of HANa before and after applying light was measured by UV-VIS spectrometry. The absorbance at 254 nm was used to follow the HANa concentration.

Table 1 summarise the results. HANa is stable and was not decomposed by either UV or VIS irradiation when no oxidant or TiO₂ was present in the so;ution. Oxidant (Na₂S₂O₈) and irradiation decomposed HANa as shown in the table 1 but only to a limited extent. The concentration of HANa decreased more with UV light than with VIS light, that might be due to a formation of stronger oxidant under UV. Photocatalyst (TiO₂) alone can also decompose HANa under the irradiation. As

TiO₂ is activated with UV light, the removal rate is again higher with VIS light. The decomposition of HANa in one hour was less than 3% and 20% under visible light and UV, respectively, in the case when only oxidant or only TiO₂ was present in the solution, showing the difficulty to oxidise HANa by oxidant and by photo-catalyst.

On the contrary, when both oxidant and photo-catalyst were added to the solution, the HANa decomposition rates dramatically increased. More than 90% of HANa was removed after exposing the solution to UV light for 1 hour. The combination of oxidant and photo-catalyst also decomposed HANa under VIS light. More than 30% of the HANa was removed after exposing the solution to VIS light for 1 hour.

The results clearly show the synergy effect of mixing oxidant and photo-catalyst.

**Table 2.**

| In all cases: 50 mg/l humic acid sodium salt, time of illumination 1 h. Notice strong synergic effect between TiO₂ and persulfate. Irradiation intensity: UV - 48 mW/cm², VIS - 88 mW/cm². | | | | | | |
|---|---|---|---|---|---|---|
| composition | 50 mg/l HANa + 1x10⁻³ mol/l Na₂S₂O₈ | | 50 mg/l HANa + 100 mg/l TiO₂ Degussa | | 50 mg/l HANa + 1x10⁻³ mol/l Na₂S₂O₈ + 100 mg/l TiO₂ Degussa | |
| light (t = 1h) | VIS | UV | VIS | UV | VIS | UV |
| Removed HANa (%) | 2.6 | 18.5 | 1.5 | 16.1 | 34.2 | 91.1 |

## Claims

1. Process for removal of organics in liquids, especially dilute, toxic organics in water, **characterized in** contacting the liquid with a system comprising microcapsules (2) containing oxidizing agents, a membrane (3) having photo-catalytic properties and a light source, and wherein said microcapsules release said oxidizing agents in a controlled manner, and said microcapsules are immobilized on the membrane.

2. Process according to claim 1, wherein the liquid is pressed through membrane by pressure.

3. Process according to claim 2, wherein a mesh filter (9) is included, and the liquid is pressed through the mesh filter by pressure.

4. Process according to claim 1, wherein microcapsules also are immobilized on a mesh filter (9), the liquid is flowing along the membrane, gas is supplied from the other side of the membrane which acts as a contactor between the liquid phase and a gas phase.

5. Process according to claim 1, wherein the membrane acts as a contactor between the liquid phase and a gas phase, and an electrical field is applied.

6. Process according to any of claims 1 to 5, wherein the shell of the capsules is made of porous materials.

7. Process according to any of claims 1 to 5, wherein the porous shell of the capsules is made of photo-catalytic materials.

8. Process according to claim 7, wherein the photo-catalytic material is preferably selected among oxides, nitrates, sulphides, carbides, metal complex salts, organic semiconductors and metals, mixtures thereof and doping of these materials with for example N, S, Pt and other ions and metals.

9. Process according to any of claims 1 to 8, wherein the capsules are filled with O₂, air, oxygen-enriched air, ozone, H₂O₂, potassium permanganate (KMn04), sodium persulphate (Na₂S₂O₈), iodine (I) or any other oxidizing substance.

10. Process according to claim 1, wherein the capsules are present in the membrane pores or at the membrane surface.

11. Process according to claim 1, wherein microcapsules containing oxidizing agents also are present in the liquid.

12. System for removal of organics in liquids, especially dilute, toxic organics in water, **characterized in that** it comprises a membrane (3) having photo-catalytic properties, microcapsules (2) containing oxidizing agents, and a light source, wherein said microcapsules release said oxidizing agents in a controlled manner and said microcapsules (2) are immobilized on the membrane (3).

13. System according to claim 12, wherein the microcapsules (2) are immobilized on a mesh filter (9).

14. System according to claim 12, wherein the membrane acts as a contactor between the liquid phase and a gas phase.

## Patentansprüche

1. Verfahren für das Entfernen organischer Stoffe in Flüssigkeiten, besonders von verdünnten, toxischen organischen Stoffen in Wasser, das sich dadurch auszeichnet, dass die Flüssigkeit mit einem System in Kontakt gebracht wird, das oxidierende Mittel enthaltende Mikrokapseln (2), eine Membran (3) mit photokatalytischen Eigenschaften und eine Lichtquelle umfasst, und wobei die besagten Mikrokapseln die besagten oxidierenden Mittel auf kontrollierte Weise freigeben und besagte Mikrokapseln auf der Membran immobilisiert sind.

2. Verfahren entsprechend Anspruch 1, wobei die Flüssigkeit unter Druck durch die Membran gepresst wird.

3. Verfahren entsprechend Anspruch 2, das einen Feinfilter (9) umfasst, wobei die Flüssigkeit unter Druck durch den Feinfilter gepresst wird.

4. Verfahren entsprechend Anspruch 1, wobei auch Mikrokapseln auf einem Feinfilter (9) immobilisiert sind, die Flüssigkeit entlang der Membran fließt und Gas von der anderen Seite der Membran zugeliefert wird, die als Kontaktor zwischen der flüssigen und der gasförmigen Phase dient.

5. Verfahren entsprechend Anspruch 1, wobei die Membran als Kontaktor zwischen der flüssigen und der gasförmigen Phase dient und ein elektrisches Feld angewendet wird.

6. Verfahren entsprechend einem der Ansprüche 1 bis 5, wobei die Schale der Kapseln aus porösem Material hergestellt ist.

7. Verfahren entsprechend einem der Ansprüche 1 bis 5, wobei die poröse Schale der Kapseln aus photokatalytischem Material hergestellt ist.

8. Verfahren entsprechend Anspruch 7, wobei das photokatalytische Material vorzugsweise aus Folgendem besteht: Oxiden, Nitraten, Sulfiden, Karbiden, komplexen Metallsalzen, organischen Halbleitern und Metallen, Mischungen davon sowie Anreicherungen dieser Materialien mit z. B. N, S, Pt und anderen Ionen und Metallen.

9. Verfahren entsprechend einem der Ansprüche 1 bis 8, wobei die Kapseln mit O₂, Luft, mit Sauerstoff angereicherter Luft, Ozon, H₂O₂, Kaliumpermanganat (KMnO4), NatriumPersulfat (Na₂S₂O₈), Jod (I) oder beliebigen anderen oxidierenden Substanzen gefüllt sind.

10. Verfahren entsprechend Anspruch 1, wobei die Kapseln in den Poren der Membran oder auf der Oberfläche der Membran vorzufinden sind.

11. Verfahren entsprechend Anspruch 1, wobei die mit oxidierenden Mitteln gefüllten Mikrokapseln auch in der Flüssigkeit vorhanden sind.

12. System für das Entfernen organischer Stoffe in Flüssigkeiten, besonders von verdünnten, toxischen organischen Stoffen in Wasser, welches sich dadurch auszeichnet, dass es eine Membran (3) mit photokatalytischen Eigenschaften, oxidierende Mittel enthaltende Mikrokapseln (2) sowie eine Lichtquelle umfasst, wobei die besagten Mikrokapseln die besagten oxidierenden Mittel auf kontrollierte Weise freigeben und besagte Mikrokapseln (2) auf der Membran (3) immobilisiert sind.

13. System entsprechend Anspruch 12, wobei die Mikrokapseln (2) auf einem Feinfilter (9) immobilisiert sind.

14. System entsprechend Anspruch 12, wobei die Membran als Kontaktor zwischen der flüssigen und der gasförmigen Phase dient.

## Revendications

1. Procédé d'élimination de produits organiques dans des liquides, notamment de produits organiques toxiques, dilués, dans l'eau, **caractérisé par** la mise en contact du liquide avec un système comprenant des microcapsules (2) contenant des agents oxydants, une membrane (3) ayant des propriétés photocatalytiques et une source de lumière, et dans lequel lesdites microcapsules libèrent lesdits agents oxydants d'une manière contrôlée, et lesdites microcapsules sont immobilisées sur la membrane.

2. Procédé selon la revendication 1, dans lequel le liquide est pressé à travers la membrane par pression.

3. Procédé selon la revendication 2, comprenant un filtre à tamis (9), à travers duquel le liquide est pressé par pression.

4. Procédé selon la revendication 1, dans lequel des microcapsules sont également immobilisées sur un filtre à tamis (9), le liquide s'écoule le long de la membrane, du gaz est introduit à partir de l'autre côté de la membrane qui agit comme contacteur entre la phase liquide et une phase gazeuse.

5. Procédé selon la revendication 1, dans lequel la membrane agit comme contacteur entre la phase liquide et une phase gazeuse, et un champ électrique est appliqué.

6. Procédé selon l'une quelconque des revendications 1 à 5, dans lequel l'enveloppe des capsules est constituée de matières poreuses.

7. Procédé selon l'une quelconque des revendications 1 à 5, dans lequel l'enveloppe poreuse des capsules est constituée de matières photocatalytiques.

8. Procédé selon la revendication 7, dans lequel la matière photocatalytique est de préférence choisie parmi les oxydes, nitrates, sulfures, carbures, sels complexes métalliques, semiconducteurs organiques et métaux, les mélanges de ceux-ci et dopage de ces matières avec par exemple N, S, Pt et autres ions et métaux.

9. Procédé selon l'une quelconque des revendications 1 à 8, dans lequel les capsules sont remplies par O₂, de l'air, de l'air enrichi en oxygène, de l'ozone, H₂O₂, du permanganate de potassium (KMnO₄), du persulfate de sodium (Na₂S₂O₂), de l'iode (I) ou n'importe quelle autre substance oxydante.

10. Procédé selon la revendication 1, dans lequel les capsules sont présentes dans les pores de la membrane ou à la surface de la membrane.

11. Procédé selon la revendication 1, dans lequel des microcapsules contenant des agents oxydants sont également présentes dans le liquide.

12. Système pour l'élimination de produits organiques dans des liquides, notamment des produits organiques toxiques, dilués, dans l'eau, **caractérisé par le fait qu'**il comprend une membrane (3) ayant des propriétés photocatalytiques, des microcapsules (2) contenant des agents oxydants, et une source de lumière, dans lequel lesdites microcapsules libèrent lesdits agents oxydants d'une manière contrôlée et lesdites microcapsules (2) sont immobilisées sur la membrane (3).

13. Système selon la revendication 12, dans lequel les microcapsules (2) sont immobilisées sur un filtre à tamis (9).

14. Système selon la revendication 12, dans lequel la membrane agit comme contacteur entre la phase liquide et une phase gazeuse.
